# FASCICULE DE BREVET EUROPEEN

(11) **EP 3 004 699 B1**
(45) Date de publication et mention de la délivrance du brevet: **15.03.2017**
(21) Numéro de dépôt: 14726374.3
(22) Date de dépôt: 27.05.2014
(51) Int. Cl.: F16K 5/04, F16K 5/06, G21C 1/09

(54) **SYSTÈME DE RÉGULATION D'UN LIQUIDE DANS UN CIRCUIT**
SYSTEM ZUR STEUERUNG EINER FLÜSSIGKEIT IN EINEM KREISLAUF
SYSTEM FOR REGULATING A LIQUID IN A CIRCUIT

(30) Priorité: 31.05.2013 FR 1355025
(43) Date de publication de la demande: 13.04.2016
(73) Titulaire: Commissariat à l'Énergie Atomique et aux Énergies Alternatives, 75015 Paris (FR)
(72) Inventeur: REY, Frédéric, F-04860 Pierrevert (FR)
(74) Mandataire: Hautier, Nicolas
(86) Numéro de dépôt international: PCT/EP2014/060906
(87) Numéro de publication internationale: WO 2014/191387

(56) Documents cités:
- WO-A1-2011/058249
- US-A- 5 722 458

## Description

### DOMAINE TECHNIQUE DE L'INVENTION

L'invention concerne de manière générale le domaine des équipements permettant la circulation d'un liquide dans un circuit. Plus précisément, l'invention concerne un système destiné à s'intégrer dans un circuit dont le sens de circulation peut être alterné.

Elle s'applique de manière particulièrement avantageuse aux circuits industriels dans lesquels il est souhaitable de faire varier la charge et le sens de circulation.

Une application concerne par exemple le nettoyage d'équipements du circuit, tels que des filtres, par inversion du sens de circulation.

Une autre application concerne les circuits d'essai qui permettent de tester ou caractériser des équipements tels que des pompes. Un domaine d'application privilégié est l'industrie nucléaire avec la caractérisation des équipements intégrés dans les réacteurs dont le caloporteur est un métal liquide.

Ainsi, l'invention s'inscrit particulièrement bien dans le développement des réacteurs de 4^{eme} génération à caloporteur sodium tel que le réacteur ASTRID (Advanced Sodium Technological Reactor for Industrial Demonstration).

### ÉTAT DE LA TECHNIQUE

Dans certains types de circuit, il est nécessaire de pouvoir inverser le sens de circulation du liquide. Il existe pour cela des pompes capables de délivrer un débit réversible. C'est le cas des pompes électromagnétiques (PEM).

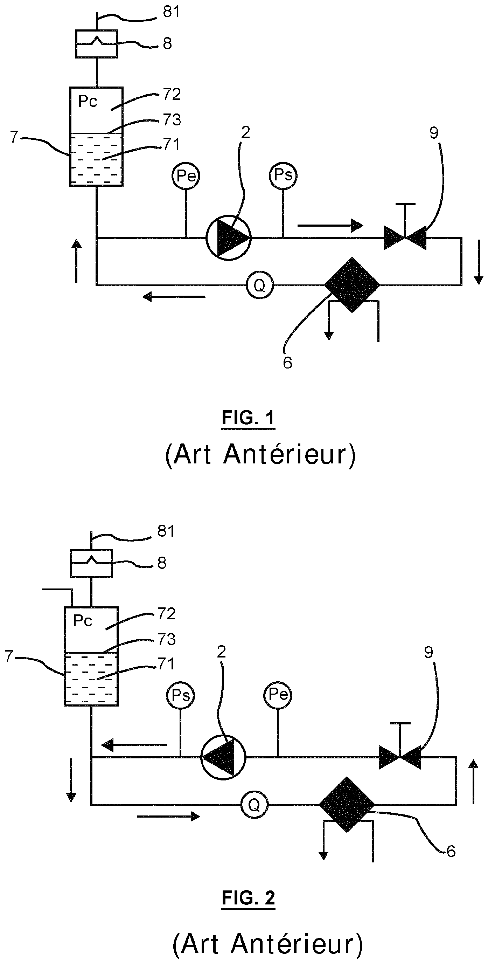

L'inversion du sens de circulation du fluide dans un circuit modifie inévitablement la répartition de pression le long de celui-ci. Ce changement de répartition de pression n'est pas compatible avec un circuit qui n'est pas prévu pour cela comme, cela va être expliqué plus en détail ci-dessous en référence à la figure 1 qui décrit un circuit conventionnel.

Le circuit illustré en figure 1 comprend une pompe 2 et une vanne de laminage 9, permettant par exemple d'interrompre la circulation ou encore de faire varier la perte de charge comme cela est le cas dans les circuits de tests et de caractérisation des pompes. Dans l'exemple illustré en figure 1, le circuit présente en outre un échangeur 6, par exemple pour évacuer la chaleur que la pompe apporte au circuit. Pompe 2, vanne de laminage 9 et échangeur 6 sont placés en série.

Le circuit comprend également un réservoir d'expansion 7, également désigné réservoir de pressurisation, placé en amont de la pompe 2 et en dérivation par rapport au circuit en étant connecté à une canalisation. De manière connue, et comme illustré en figure 1, un réservoir d'expansion 7 comprend une chambre d'expansion en communication libre et permanente avec le liquide du circuit et comprend un gaz 72 appliquant une pression sur la surface libre 73 du liquide 71 du réservoir d'expansion 7.

Il ne circule pas de débit dans le réservoir d'expansion 7. Il y existe seulement un déplacement du liquide 71 du réservoir d'expansion 7 permettant de compenser les variations de volume du liquide présent dans le circuit. Cette variation de volume est due aux variations de température du liquide. Dans le cadre de circuit caloporteur, ces variations de volume peuvent être significatives. Ainsi, le réservoir d'expansion 7 permet de limiter les variations de pression en amont d'une pompe 2.

Le réservoir d'expansion 7 est associé à un dispositif de contrôle de la pression du gaz de pressurisation Pc, qui par injection ou retrait de gaz permet de faire varier la pression du gaz 72 et donc la pression. Il est également doté d'un dispositif de protection 8 limitant la pression dans le circuit pour en éviter la destruction et les conséquences associées. En cas de surpression dans le circuit, le dispositif de protection 8 s'active et la surpression (de gaz et/ou de liquide) est dirigée vers un exutoire 81. Il y a alors ouverture du circuit.

Dans les circuits de tests, en mesurant la pression Pc du réservoir d'expansion 7, et les pressions en amont Pe et en aval Ps de la pompe 2 ainsi qu'en faisant varier des paramètres tel que le sens de circulation du liquide et la perte de charge par actionnement de la vanne de laminage 9, on peut caractériser le comportement de la pompe 2.

Sur la figure 1, le sens de circulation est représenté par les flèches. La répartition de pression est alors telle que : Ps > Pe. Par simplification, on considère ici que Pc ≈ Pe. En effet Pc est fixée par la valeur de la pression Pe et la différence entre ces deux pressions est égale à la pression exercée par la hauteur de liquide comprise entre l'altitude de la surface libre 73 dans le réservoir d'expansion 7 et l'altitude de l'entrée de la pompe 2. Cette pression altimétrique est le plus souvent négligeable. La pression Pc est généralement fixée à une valeur proche de la pression atmosphérique (de 1 à 2 bars absolus), donc nettement inférieure aux valeurs que peut prendre Ps (de quelques bars à plusieurs dizaines de bars voire plus). Le dispositif de protection 8 est prévu pour s'enclencher si la pression Pc atteint une valeur limite au-delà de laquelle l'installation n'est plus en sécurité. Dans le cas du schéma précédent, ce dispositif pourrait être taré à une pression à peine supérieure à Pc, soit 2,5 bars par exemple. Si le sens de circulation est celui de la Figure 1, i.e. de la pompe 2 vers la vanne de laminage 9, l'ensemble fonctionne correctement.

La figure 2 illustre le circuit de la figure 1 dans lequel le sens de circulation est inversé.

Cette inversion de sens de circulation, même volontaire, fait que la pompe 2 débite à la pression Ps dans la portion du circuit qui est reliée au réservoir d'expansion 7. Cela risque donc de déclencher le dispositif de protection 8 et d'ouvrir le circuit alors qu'il n'y a pas défaillance du circuit.

Par ailleurs, la pression Pe en entrée de pompe 2 peut potentiellement descendre sous la pression de vapeur saturante du fluide contenu dans le circuit et entraîner sa vaporisation dans la portion de circuit comprise entre la vanne de laminage 9 et la pompe 2. La pompe 2 peut alors être endommagée et des turbulences importantes peuvent être générées.

Ainsi, la position relative de la pompe 2 et du réservoir d'expansion 7 dépend du sens de circulation du liquide dans le circuit. Cela pose donc problème dans les circuits à sens de circulation réversible.

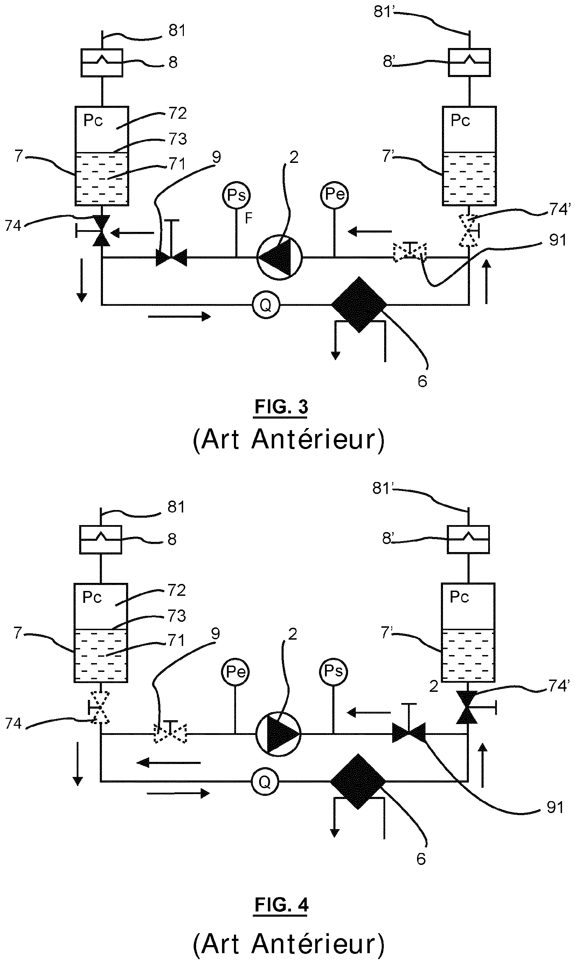

Pour permettre la réversibilité du sens de circulation, une solution consiste à équiper le circuit de deux vannes de laminage 9, 91 et de deux réservoirs d'expansion 7, 7', chacun doté d'un dispositif de sécurité 8, 8' et d'un dispositif de contrôle de la pression. Un tel système est illustré en figure 3 et 4. En outre, il est nécessaire de prévoir une vanne d'isolement 74, 74' entre chaque réservoir d'expansion et le circuit. En fonction du sens de circulation, un réservoir d'expansion 7, 7' est déconnecté du circuit en fermant la vanne d'isolement 74, 74' qui le relie au circuit. Sur ces figures les vannes en pointillés sont pleinement ouvertes et les vannes en traits pleins sont pleinement fermées.

Cette solution présente pour inconvénient de nécessiter de nombreux équipements et une complexité accrue ce qui tend à réduire la fiabilité de l'ensemble et à augmenter le coût de fabrication et de maintenance. De plus, cela nécessite soit des interventions humaines fréquentes pour les ouvertures et les fermetures de vannes, soit la mise en place d'un système de pilotage automatique, avec les risques de défaillances associés.

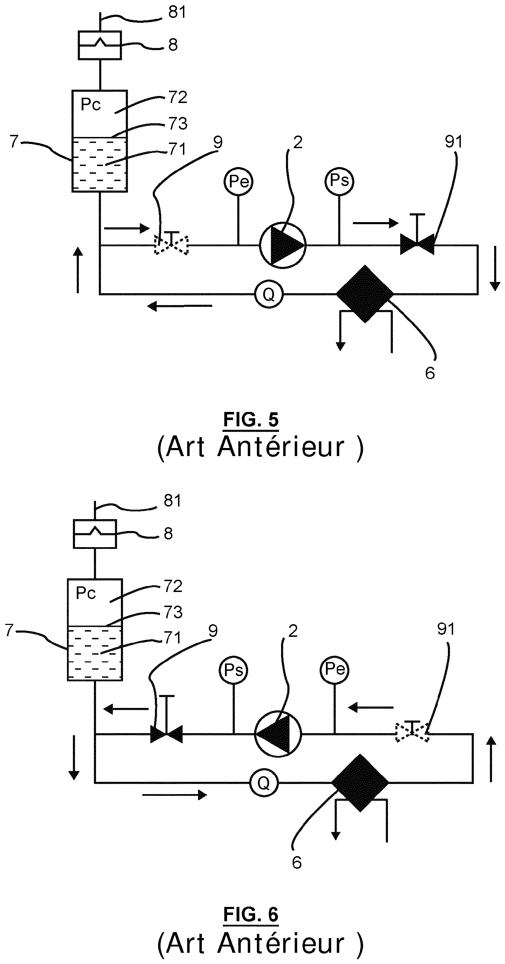

Une autre solution illustrée aux figures 5 et 6, consiste à prévoir un circuit équipé de deux vannes de laminage 9, 91 et d'un seul réservoir d'expansion 7 doté d'un dispositif de protection 8 et d'un dispositif de contrôle de la pression. La vanne de laminage 9 disposée en entrée de pompe 2 est toujours pleinement ouverte. Cette vanne est représentée en pointillés dans le deux sens de circulation. Lorsque le réservoir d'expansion est disposé en entrée de pompe (figure 5), le circuit fonctionne normalement, puisque la pression en sortie de pompe n'est pas directement transférée au réservoir d'expansion 7.

Lorsque le réservoir d'expansion 7 est disposé en sortie de pompe (figure 6), la perte de charge provoquée par l'échangeur risque d'abaisser trop fortement la pression en entrée de pompe et de l'amener sous un seuil de cavitation.

Cette solution est donc limitée à des applications dans lesquelles la pression est suffisamment élevée pour éviter la cavitation. La plage de débit utile est par conséquent nécessairement réduite.

Il existe donc un besoin consistant à offrir une solution permettant une circulation de liquide qui soit réversible et qui ne présente pas certains au moins des inconvénients mentionnés ci-dessus des solutions existantes.

La présente invention vise à atteindre cet objectif.

Plus précisément, elle a pour objectif de proposer un circuit permettant d'alterner le sens de circulation tout en limitant la complexité du circuit et en permettant une plage de fonctionnement non restreintes

### RÉSUMÉ DE L'INVENTION

Pour atteindre cet objectif, un mode de réalisation de la présente invention concerne un système de régulation d'un liquide circulant dans un circuit de préférence apte à inverser le sens de circulation, le système comprenant :
- une vanne de régulation comprenant au moins une entrée et une sortie, destinée à être chacune connectée à une branche du circuit et comprenant un obturateur mobile dont la position permet de réguler le débit de l'écoulement du liquide à travers la vanne,
- un réservoir d'expansion destiné, en fonctionnement, à être en communication avec le liquide s'écoulant dans le circuit et destiné à contenir du liquide formant un volume d'expansion et un fluide, typiquement un gaz de compensation, le réservoir d'expansion étant configuré de manière à compenser au moins en partie les variations de volume et/ou de pression du liquide dans le circuit de manière à maintenir dans le circuit une pression supérieure ou égale à une pression minimale souhaitée dans le circuit.

Avantageusement, le réservoir d'expansion est raccordé au circuit par l'intermédiaire de la vanne, de préférence entre l'entrée et la sortie de la vanne, et de manière à ce que le réservoir d'expansion communique avec au moins l'une parmi l'entrée et la sortie de la vanne quelle que soit la position de l'obturateur, la position de l'obturateur étant indépendante de la pression du fluide dans le réservoir d'expansion.

La position de l'obturateur est également indépendante de la pression du liquide dans le circuit.

Ainsi, l'invention permet de concevoir un circuit réversible dans lequel le réservoir d'expansion est en permanence en communication avec le liquide du circuit.

En outre, l'invention permet d'améliorer considérablement la fiabilité du système puisqu'elle ne nécessite pas de piloter avec précision des vannes d'isolement d'un ou plusieurs réservoirs comme dans une solution de l'art antérieur. Avec la solution illustrée en figure 3 et 4, un pilotage incorrect des vannes d'isolement peut en effet entrainer une désactivation simultanée des deux réservoirs d'expansion ce qui peut provoquer de graves conséquences.

Par ailleurs, il est possible de n'avoir qu'une seule vanne de laminage formée par la vanne. Cela permet de réduire la perte de charge inévitablement induite par la présence de vannes additionnelles comme cela est le cas dans d'autres solutions de l'art antérieur. L'invention permet ainsi d'élargir la plage des débits admissibles.

En plus de simplifier le pilotage du réservoir d'expansion, l'invention permet de réduire significativement le nombre de composants nécessaires et notamment le nombre de composants de pilotage, ce qui permet d'améliorer la fiabilité du circuit et d'en diminuer le coût.

Par ailleurs, le système selon l'invention permet de contrôler de manière précise et fiable la pression la plus basse du circuit, évitant ainsi que la pression dans le circuit ne baisse en dessous d'une pression minimale souhaitée.

De manière facultative, l'invention peut en outre présenter au moins l'une quelconque des caractéristiques suivantes qui peuvent être considérées séparément ou en combinaison :
- Avantageusement, le système est configuré de manière à ce que le réservoir d'expansion soit, en fonctionnement, en communication permanente avec le liquide s'écoulant dans le circuit.
- De préférence, l'obturateur présente au moins un canal d'expansion pour le passage du liquide et le système est agencé de manière à ce que la communication entre le réservoir d'expansion et entre l'une parmi l'entrée et la sortie de la vanne s'effectue au moins en partie par ledit canal d'expansion et quelle que soit la position de l'obturateur. Ainsi, l'obturateur comprend un canal de passage configuré pour permettre une communication permanente entre le réservoir d'expansion et au moins l'une des branches du circuit.
- Avantageusement, la vanne est une vanne à boisseau. Avantageusement, la vanne est de type à « passage intégral ». Elle permet, lorsqu'elle est totalement ouverte de créer une perte de charge du même ordre que la portion d'une tuyauterie, d'un coude ou d'une section droite, de même longueur. Alternativement, la vanne est une vanne à obturateur translatif.
- Selon un premier mode de réalisation, l'obturateur comprend un passage interne à travers lequel est destiné à passer tout le liquide s'écoulant depuis l'entrée vers la sortie de la vanne et le boisseau comporte au moins un canal d'expansion, entièrement porté par le boisseau présentant une première extrémité qui débouche dans le passage interne et présentant une deuxième extrémité qui débouche dans le réservoir d'expansion. De préférence, la deuxième extrémité du canal d'expansion est située sur une face supérieure du boisseau. De préférence, le canal forme un conduit, de préférence un conduit linéaire. Il est fermé à l'exception des deux extrémités. De préférence, tout le liquide passant depuis le circuit au réservoir d'expansion passe par le ou les canaux d'expansion.
- Selon un deuxième mode de réalisation, le système comprend un passage interne à travers lequel est destiné à passer tout le liquide s'écoulant depuis l'entrée vers la sortie de la vanne et l'obturateur comprend une face latérale portant un évidement. L'évidement est conformé pour, dans certaines positions de l'obturateur, être en communication directe avec le liquide provenant de l'entrée ou de la sortie de la vanne et, dans d'autres positions de l'obturateur, coopérer avec une paroi interne du corps de vanne de manière à former un canal fermé débouchant d'une part dans le réservoir d'expansion et débouchant d'autre part dans un espace formé par une face inférieure de l'obturateur et un fond du corps de vanne, cet espace étant en communication avec le passage interne par un canal pratiqué dans l'obturateur.

Ainsi, l'évidement forme une partie du canal d'expansion. L'évidement forme de préférence une rainure. L'un des avantages de ce mode de réalisation est de réduire les risques d'apparition de jets de liquide à l'intérieur du réservoir d'expansion. Le niveau de la surface libre du liquide dans le réservoir d'expansion est donc stabilisé ce qui rend plus fiable le contrôle du niveau et de la pression de liquide dans le circuit.

De préférence, le système est conformé de manière à ce que lorsque la vanne est ouverte, le réservoir d'expansion communique avec le liquide traversant la vanne uniquement par l'intermédiaire de l'évidement, dudit espace et du canal inférieur.
Ainsi, lorsque la vanne est ouverte et que la vitesse de circulation du liquide est importante, le liquide pénétrant dans le réservoir d'expansion ne passe pas directement depuis le passage interne au réservoir d'expansion, limitant de ce fait les jets dans ce dernier.
- Avantageusement, la vanne comprend un corps et un chapeau formant une enceinte et le réservoir d'expansion étant logé dans l'enceinte. Ainsi, le réservoir d'expansion et la vanne sont regroupés au sein d'un même composant. Cela permet notamment de simplifier le montage du circuit et d'en limiter l'encombrement. En outre, le nombre de composants est limité et la fiabilité du circuit améliorée. En particulier, l'étanchéité du système est rendue particulièrement sûre.
- L'obturateur est mobile à l'intérieur du corps de vanne. L'obturateur mobile est mobile par rapport au réservoir d'expansion. Le corps de vanne est fixe par rapport à un bâti du système. Typiquement, le corps de vanne est fixe par rapport aux conduits connectés à l'entrée et à la sortie de la vanne. Le réservoir d'expansion est fixe par rapport au corps de vanne lors du déplacement de l'obturateur mobile.
- Avantageusement, le réservoir d'expansion est formé au moins en partie par une paroi interne du corps de vanne. Plus précisément, le réservoir d'expansion est formé par les parois internes du corps de vanne, par la paroi interne du chapeau et par une face supérieure du corps de l'obturateur mobile. De préférence, le réservoir d'expansion est défini uniquement par les parois internes du corps de vanne, par la paroi interne du chapeau et par une face supérieure du corps de l'obturateur mobile.

- Le réservoir d'expansion est logé en partie au moins dans le chapeau. De préférence, au moins 20% et de préférence au moins 30% et de préférence au moins 50% du volume interne du réservoir d'expansion est logé dans le volume interne du chapeau. L'obturateur est distant du chapeau. Il n'est pas présent dans le chapeau.
- Selon un mode de réalisation avantageux, le réservoir d'expansion est verticalement disposé plus haut que l'obturateur mobile. Le liquide présent dans le réservoir d'expansion peut donc s'écouler par gravité vers l'obturateur mobile. De préférence, le réservoir d'expansion peut être disposé à la verticale et au-dessus de l'obturateur mobile ou ne pas être disposé à la verticale de l'obturateur mobile. Selon un mode de réalisation avantageux, le réservoir d'expansion surmonte l'obturateur mobile.
- Selon un mode de réalisation, l'obturateur mobile est distant d'une partie au moins du réservoir d'expansion. Ainsi, dans une partie au moins du réservoir d'expansion, l'obturateur mobile est absent.
- Selon un mode de réalisation, le réservoir d'expansion est distant de l'obturateur.
- Selon un mode de réalisation, le réservoir d'expansion est connecté sur la vanne en étant disposé à distance de cette dernière.
- Le réservoir d'expansion est distinct de l'obturateur. Cela permet notamment de ne pas entrainer en déplacement le réservoir d'expansion lors du déplacement de l'obturateur mobile, améliorant de ce fait la fiabilité et la robustesse du système. L'indépendance entre réservoir d'expansion est obturateur permet également de dimensionner indépendamment le réservoir d'expansion et l'obturateur mobile. En particulier, le réservoir d'expansion peut être adapté, notamment en termes de volume, aux caractéristiques du circuit (débit, pression), tout en conservant un obturateur mobile de faible dimension afin de réduire l'encombrement du système et de réaliser un obturateur mobile aux dimensions et états de surface parfaitement maîtrisés.
- Le réservoir d'expansion est configuré de manière à contenir un gaz compressé.
- Avantageusement, en position fermée, le corps de l'obturateur empêche toute communication du liquide entre l'entrée et la sortie c'est-à-dire d'une bride à l'autre.
- Avantageusement, le système est configuré de manière orienter le sens de fermeture de l'obturateur en fonction du sens de circulation du liquide dans le circuit.
- Avantageusement, en position fermée de la vanne, le passage interne de l'obturateur demeure en communication avec une portion de circuit séparant la vanne d'une entrée de la pompe.
- Avantageusement, l'obturateur est actionné par un dispositif de commande comprenant un motoréducteur logé à l'intérieur du réservoir d'expansion. Ainsi il est situé dans l'enceinte. Avantageusement, le motoréducteur est immergé dans le gaz de compensation, réduisant de ce fait les contraintes d'étanchéité.
- Avantageusement, le système comprend une surverse pour limiter le niveau du liquide dans le réservoir d'expansion et dans lequel le motoréducteur est disposé au-dessus de la surverse. Le système est configuré de manière à ce que le niveau du liquide dans le réservoir d'expansion soit inférieur à un niveau donné, et dans lequel, le motoréducteur est disposé au-dessus de ce niveau donné.
- Avantageusement, le système comprend un dispositif disposé dans le réservoir d'expansion, sous la surverse et configuré pour briser les jets de liquide provenant du canal d'expansion.
- Avantageusement, le système comprend un dispositif de protection thermique logé à l'intérieur du réservoir d'expansion et conformé pour isoler thermiquement le motoréducteur de la chaleur du liquide.
- Avantageusement, le système comprend un palier de guidage en rotation de l'obturateur et dans lequel le palier est logé à l'intérieur du réservoir d'expansion. Ainsi, le palier est situé dans l'enceinte. Avantageusement, le système est configuré de manière à ce qu'en fonctionnement le palier est immergé dans le fluide. Alternativement il est immergé dans le gaz de compensation et est situé hors du fluide. Avantageusement, le palier comprend un passage permettant la circulation libre du fluide à travers le palier.
- Avantageusement, la vanne est une vanne de laminage.
- Avantageusement, la vanne est une vanne coudée. Plus précisément, l'enveloppe externe du corps de vanne est cylindrique et le passage interne est coudé en présentant de préférence une courbure continue. Ainsi, l'entrée et la sortie forment ainsi un angle différent de 180° et de préférence compris entre 45° et 160°. Alternativement, la vanne est une vanne droite également désignée vanne en ligne.
- Avantageusement, l'entrée et/ou la sortie est formée par une bride configurée pour être connectée à une canalisation du circuit.

Un autre aspect de la présente invention concerne un circuit comprenant un système selon l'une quelconque des caractéristiques précédentes et une pompe apte à débiter dans deux sens opposés. De manière optionnelle et avantageuse :
- la vanne est une vanne à boisseau, dans laquelle le boisseau comprend au moins un canal d'expansion pour le passage du liquide débouchant dans un passage interne du boisseau pour mettre en communication le réservoir d'expansion et le circuit, le circuit étant configuré de manière à orienter le sens de fermeture du boisseau en fonction du sens de circulation du liquide dans le circuit.
- le circuit est configuré de sorte à ce que, lors de la fermeture de la vanne, l'obturateur soit tourné de manière à ce que le passage interne demeure en communication avec une portion de circuit séparant la vanne d'une entrée de la pompe.
- le circuit comprend une unique vanne. Ainsi la perte de charge est limitée par rapport aux circuits comprenant deux vannes pour assurer le fonctionnement réversible du circuit. La plage de débit admissible est donc plus importante.

Un autre aspect de la présente invention concerne l'utilisation du système selon l'invention pour réguler la circulation d'un liquide présentant une température supérieure ou égale à 350°C et de préférence supérieure ou égale à 400°C.

De préférence, l'invention est utilisée pour réguler la circulation de sodium liquide destiné à assurer le transfert de chaleur dans un circuit de réacteur nucléaire à caloporteur sodium.

Les autres objets, caractéristiques et avantages de la présente invention apparaîtront à l'examen de la description suivante et des dessins d'accompagnement. Il est entendu que d'autres avantages peuvent y être incorporés.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 est un schéma représentant un premier circuit selon l'art antérieur dans lequel le liquide circule dans un premier sens.
La FIGURE 2 est un schéma du circuit illustré en figure 1 et dans lequel le liquide circule dans un deuxième sens opposé au premier.
Les FIGURES 3 et 4 sont des schémas représentant un deuxième circuit selon l'art antérieur dans lequel le liquide circule respectivement dans un premier sens et dans un deuxième sens.
Les FIGURES 5 et 6 sont des schémas représentant un troisième circuit selon l'art antérieur dans lequel le liquide circule respectivement dans un premier sens et dans un deuxième sens.
La FIGURE 7 est un schéma représentant un exemple de circuit équipé d'un système selon un mode de réalisation de l'invention.
La FIGURE 8 est une vue en perspective d'un corps de vanne d'un système selon un premier exemple de réalisation de l'invention.
La FIGURE 9 est une vue du dessus du corps de vanne illustré en figure 8.
La FIGURE 10 est une vue en coupe simplifiée d'un système selon un premier exemple de réalisation de l'invention.
La FIGURE 11 est une vue en perspective d'un boisseau cylindrique équipant le système selon l'exemple de réalisation de l'invention illustré en figure 10.
La FIGURE 12 est une vue en coupe du boisseau illustré en figure 11.
La FIGURE 13 est une vue selon la coupe BB du système selon l'exemple de réalisation de l'invention illustré en figure 10, dans lequel la vanne est pleinement ouverte.
La FIGURE 14 est une vue selon la coupe BB du système selon l'exemple de réalisation de l'invention illustré en figure 10, dans lequel la vanne est pleinement fermée dans un premier sens.
La FIGURE 15 est une vue selon la coupe CC du système dans la configuration illustrée en figure 14.
La FIGURE 16 est une vue selon la coupe BB du système selon l'exemple de réalisation de l'invention illustré en figure 10, dans lequel la vanne est pleinement fermée dans un deuxième sens.
La FIGURE 17 est une vue selon la coupe DD du système dans la configuration illustrée en figure 16.
La FIGURE 18 est une vue en perspective d'un corps de vanne d'un système selon un deuxième exemple de réalisation de l'invention.
La FIGURE 19 est une vue du dessus du corps de vanne illustré en figure 18.
La FIGURE 20 est une vue en perspective d'un boisseau cylindrique équipant un système selon le deuxième exemple de réalisation de l'invention.
La FIGURE 21 est une vue en coupe du boisseau illustré en figure 20.
La FIGURE 22 est une vue en coupe simplifiée d'un système selon le deuxième exemple de réalisation de l'invention.
La FIGURE 23 est une vue selon la coupe BB du système selon l'exemple de réalisation de l'invention illustré en figure 22, dans lequel la vanne est pleinement ouverte.
La FIGURE 24 est une vue selon la coupe BB du système selon l'exemple de réalisation de l'invention illustré en figure 22, dans lequel la vanne est pleinement fermée dans un premier sens.
La FIGURE 25 est une vue selon la coupe CC du système dans la configuration illustrée en figure 24.
La FIGURE 26 est une vue selon la coupe BB du système selon l'exemple de réalisation de l'invention illustré en figure 22, dans lequel la vanne est pleinement fermée dans un deuxième sens.
La FIGURE 27 est une vue selon la coupe DD du système dans la configuration illustrée en figure 26.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions et épaisseurs relatives des différentes pièces, parois et organes ne sont pas représentatives de la réalité.

### DESCRIPTION DÉTAILLÉE DE L'INVENTION

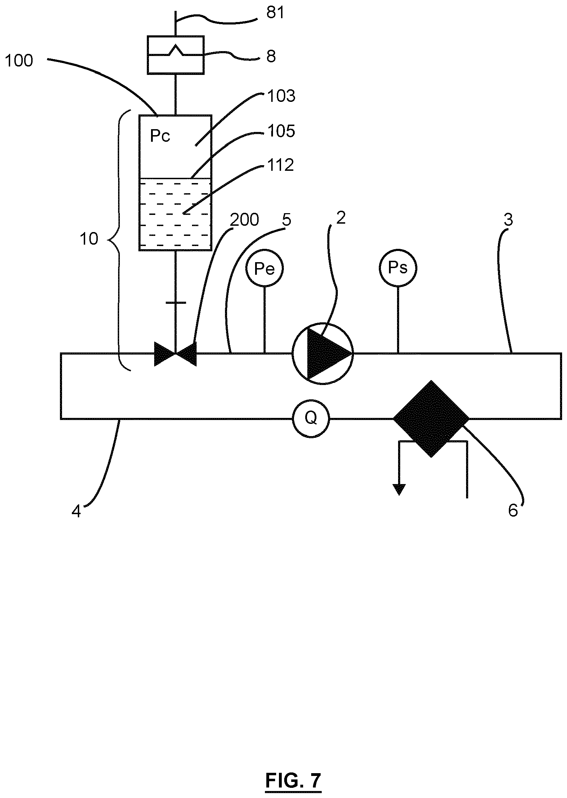

Un exemple de circuit intégrant un système selon l'invention va maintenant être décrit en référence à la **figure 7****.**

Dans cet exemple, le circuit 1 comprend une pompe 2, de préférence réversible, un échangeur 6 et un système 10 selon l'invention comprenant une vanne 200. Ces trois éléments sont disposés en série. Ils forment un circuit fermé et sont fluidiquement connectés entre eux par des tronçons 3, 4, 5 de canalisation. Le tronçon 3 relie la pompe 2 à l'échangeur 6, le tronçon 4 relie l'échangeur 6 à la vanne 200 du système 10 et le tronçon 5 relie la vanne 200 du système 10 à la pompe.

Dans le cadre de la présente invention, on qualifie de circuit 1 le circuit fermé comprenant la pompe 2 et comprenant de préférence l'échangeur 6 ou tout autre organe(s) ainsi que la vanne 200 du système 10. D'autres éléments peuvent naturellement être incorporés au système 10. Par ailleurs, l'échangeur 6 peut être remplacé par un autre composant ou plusieurs autres composants.

La pompe 2 est réversible ce qui lui permet d'avoir pour entrée et pour sortie, respectivement les tronçons 5 et 3 ou inversement pour entrée et pour sortie respectivement les tronçons 3 et 5. La vanne 200 comprend une sortie et une entrée qui s'inversent en fonction du sens de circulation du liquide.

De manière particulièrement avantageuse, le système 10 comprend un réservoir d'expansion 100 permettant de compenser les variations de volume du liquide présent dans le circuit et qui sont dues aux variations de température du liquide. Le réservoir d'expansion 100 est connecté à la vanne 200 montée en série sur le circuit 1. Ainsi, le réservoir d'expansion 100 n'est pas connecté en série sur le circuit 1 comprenant la pompe 2 et la vanne 200. Il est connecté en dérivation par l'intermédiaire de la vanne 200.

La vanne 200 est configurée pour permettre une communication permanente entre le circuit 1 et le réservoir d'expansion 100. Ainsi, quelle que soit la position de l'obturateur de la vanne 200, le réservoir d'expansion 100 communique avec au moins l'un des tronçons 4 ou 5 du circuit.

De manière particulièrement avantageuse, cela permet d'améliorer considérablement la fiabilité du système 10 puisqu'il n'est alors plus nécessaire de piloter avec précision des vannes d'isolement d'un ou plusieurs réservoirs comme dans la solution illustrée en figures 3 et 4. En outre, il est possible de n'avoir qu'une seule vanne de laminage formée par la vanne 200. Cela permet de réduire la perte de charge inévitablement induite par la présence de vannes additionnelles comme cela est le cas dans la solution illustrée sur les figures 5 et 6. Notamment, l'invention ne nécessite pas la présence d'une vanne de laminage 91 sur le tronçon 3 entre l'échangeur 6 et la pompe 2. L'invention permet ainsi d'élargir la plage des débits admissibles. En plus de simplifier le pilotage du réservoir d'expansion 100, l'invention permet de réduire significativement le nombre de composants nécessaires et notamment le nombre de composants de pilotage, ce qui permet d'améliorer la fiabilité du circuit 1 et d'en diminuer le coût.

Le réservoir d'expansion 100 peut être connecté sur la vanne 200 en étant disposé à distance de cette dernière. Dans un mode de réalisation préféré, le réservoir d'expansion 100 et la vanne 200 sont au contraire regroupés au sein d'un même composant. Cela permet notamment de simplifier le montage du circuit et d'en limiter l'encombrement. De manière plus avantageuse encore, cela permet de rapprocher le réservoir d'expansion 100 du circuit 1 et d'améliorer ainsi la réactivité du réservoir d'expansion 100 et d'un dispositif de protection 8 contre les surpressions associé au réservoir d'expansion 100. De manière avantageuse, les portions de réservoir d'expansion comprenant le liquide 112 et le gaz de pressurisation 103 présentent des diamètres sensiblement identiques, la surface libre étant repérée par la référence 105.

Préférentiellement, le réservoir d'expansion 100 surmonte la vanne 200 et communique avec le liquide du circuit par un canal, désigné canal d'expansion 213, porté au moins en partie par l'obturateur. De manière également avantageuse, la vanne 200 comprend un corps 201 et un chapeau 101 formant à tous les deux une enceinte 102, le réservoir d'expansion 100 étant logé à l'intérieur de cette enceinte 102.)

Ainsi, l'obturateur mobile est distinct du réservoir d'expansion 100, ce dernier étant fixe par rapport au corps 201 de vanne 200. L'obturateur mobile est mobile par rapport au réservoir d'expansion 100.

Dans les modes de réalisation non limitatifs illustrés sur les figures qui sont décrites ci-dessous, le réservoir d'expansion 100 est verticalement disposé au-dessus de l'obturateur mobile. Plus précisément, le réservoir d'expansion 100 surmonte l'obturateur mobile. Le réservoir d'expansion est formé par les parois internes du corps 201 de vanne 200, par la paroi interne du chapeau 101 et par une face supérieure 214 du corps de l'obturateur mobile. Ainsi, le réservoir d'expansion est logé en partie au moins dans le chapeau. De préférence, au moins 20% et de préférence au moins 30% et de préférence au moins 50% du volume interne du réservoir d'expansion 100 est logé dans le volume interne du chapeau 101.

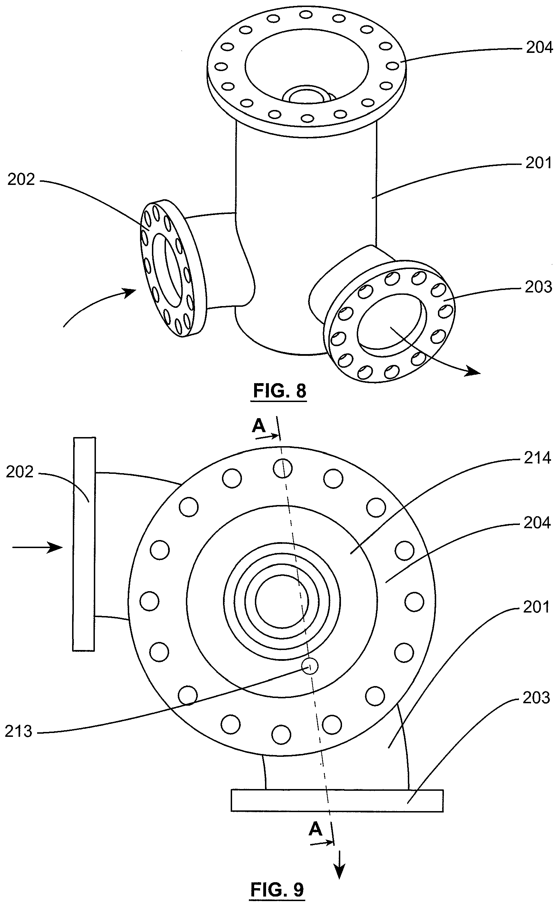

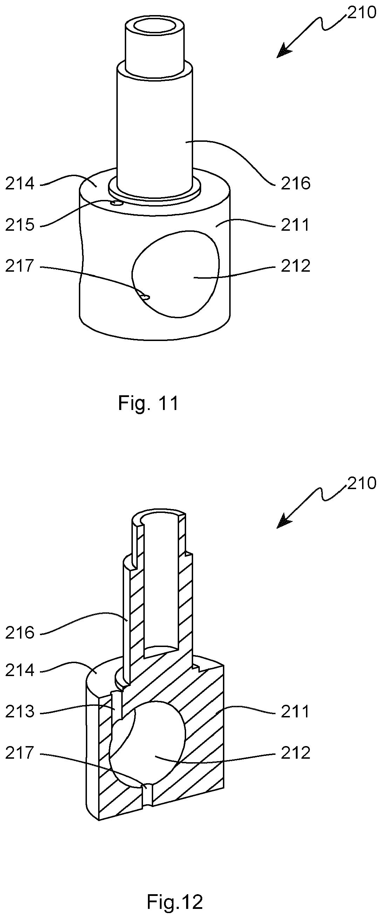

Un premier exemple de système 10 selon l'invention va maintenant être décrit en détail en référence aux **figures 8 à 17****.**

Dans l'exemple qui suit, la vanne 200 est une vanne de laminage ou une vanne permettant de faire circuler ou d'interrompre la circulation du liquide à l'intérieur du circuit 1. Dans cet exemple, cette vanne 200 est une vanne à boisseau. L'invention s'étend cependant à d'autres types de vannes, comme les vannes à obturateur translatif.

Les **figures 8 et 9** représentent le corps 201 de vanne à l'intérieur duquel l'obturateur, un boisseau 210 par exemple cylindrique, est mobile pour réguler le passage du liquide d'une bride à l'autre de la vanne 200. Pour un sens de circulation du fluide, la bride 202 forme l'entrée de la vanne et la bride 203 forme la sortie de la vanne. Entrée et sortie sont naturellement inversées en cas d'inversion du sens de circulation. Sur l'exemple illustré, les brides 202, 203 sont destinées à être connectées à une tuyauterie par boulonnage sans que cela soit limitatif. En effet, une fixation par soudage est envisageable, notamment pour les applications dans lesquelles le liquide est un métal liquide tel du sodium comme c'est le cas dans les réacteurs nucléaires à caloporteur sodium.

Dans l'exemple qui suit, la vanne est une vanne coudée, bien que l'invention s'étende aux vannes droites également désignées vannes en ligne où l'entrée et la sortie sont sensiblement coaxiales et où les tronçons 4 et 5 sont alors disposés dans le prolongement l'un de l'autre.

Dans l'exemple qui suit, la vanne 200 étant coudée, les brides 202, 203 forment alors un angle différent de 180°. Ainsi, la vanne 200 peut être disposée dans un angle d'un circuit. Elle n'occupe ainsi pas de place sur les portions droites du circuit et génère de la turbulence là où le coude qu'elle remplace en aurait également généré.

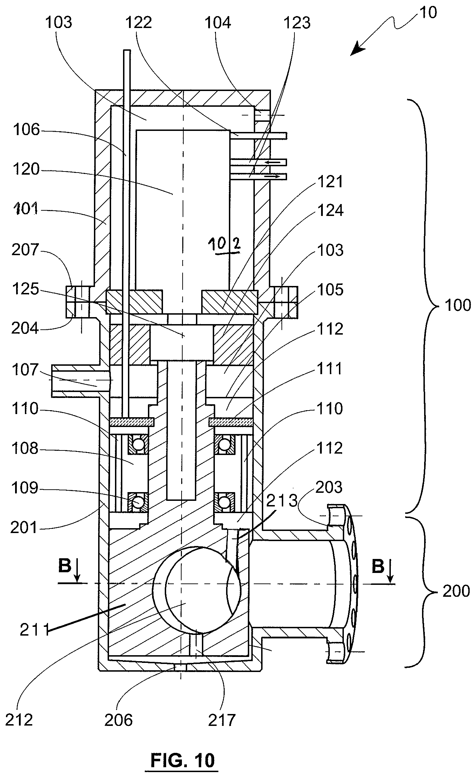

Comme illustré sur les **figures 10****,** **11 et 12**, le boisseau 210 présente un corps 211 qui comporte un passage interne 212 pour le liquide. Ce passage interne 212 permet de mettre en communication l'entrée et la sortie du liquide pour certaines positions angulaires au moins du boisseau 210 par rapport au corps 201 de vanne. Comme dans toutes vannes à boisseau, la forme et la dimension de l'intérieur du corps 201 de vanne et du corps 211 du boisseau sont choisies de manière à ce que le liquide ne puisse s'écouler d'une bride à l'autre qu'au travers du passage interne 212 porté par le corps 211 du boisseau 210.

La position angulaire du boisseau par rapport au corps 201 de vanne donc par rapport aux brides d'entrée 202 et de sortie 203, est commandée par un dispositif de commande comprenant typiquement un actionneur, par exemple un motoréducteur 120.

Le corps 201 de vanne et le chapeau 101 forment une enceinte 102 à l'intérieur de laquelle est logé le réservoir d'expansion 100. Cette enceinte 102 est étanche à l'exception d'un canal 213 de communication entre le réservoir d'expansion 100 et l'une des brides, comme cela sera décrit ultérieurement, et éventuellement à l'exception d'une surverse 107, d'un orifice 104 pour la gestion des gaz de pressurisation qui seront également décrits plus en détail par la suite.

De manière particulièrement avantageuse, le corps 211 du boisseau comporte un canal 213 permettant au liquide circulant à l'intérieur du circuit et provenant de l'une des deux brides 202, 203, de pénétrer à l'intérieur du réservoir d'expansion 100 formé par l'enceinte 102. Il est ainsi qualifié de canal d'expansion 213. Préférentiellement, ce canal d'expansion 213 débouche d'une part à l'intérieur du passage interne 212 porté par le corps 211 du boisseau 210 et d'autre part dans l'enceinte 102. Typiquement, dans le cas d'une vanne à boisseau cylindrique, ce canal d'expansion 213 est un conduit tubulaire, de préférence rectiligne, ou un trou débouchant d'une part dans une moitié supérieure du passage interne 212 et d'autre part sur une face supérieure 214 du corps 211 du boisseau. Ce canal d'expansion 213 présente ainsi un trou supérieur 215 illustré sur les figures 10 à 17.

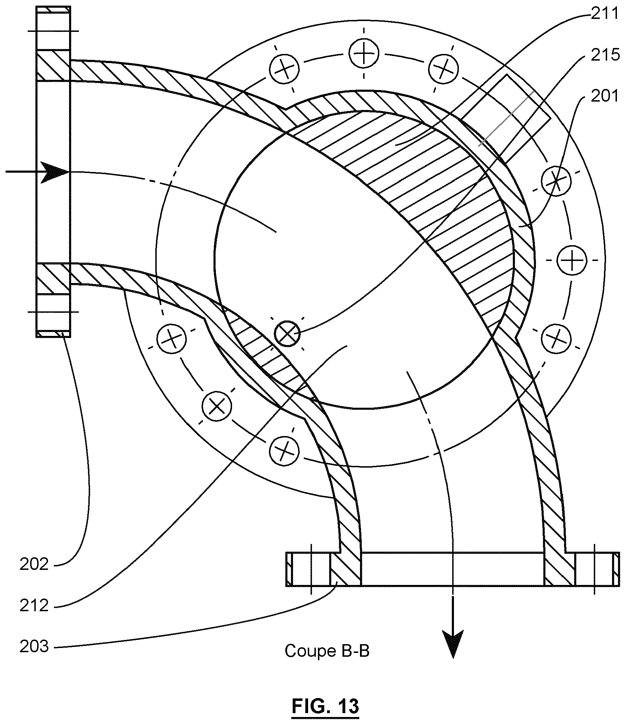

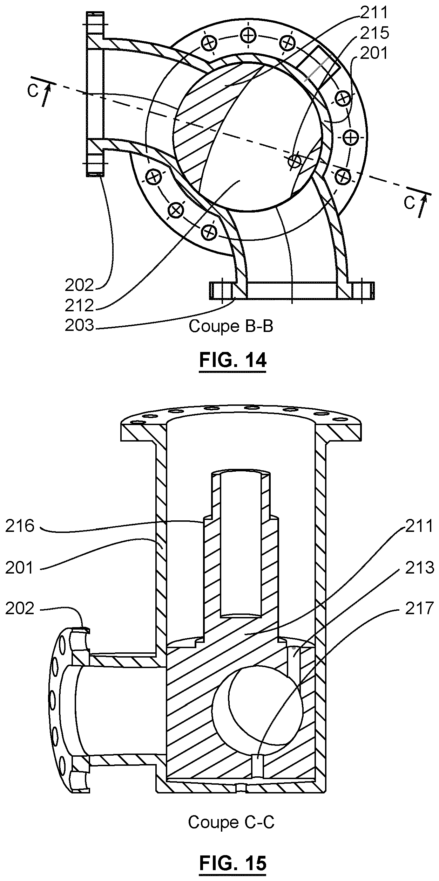

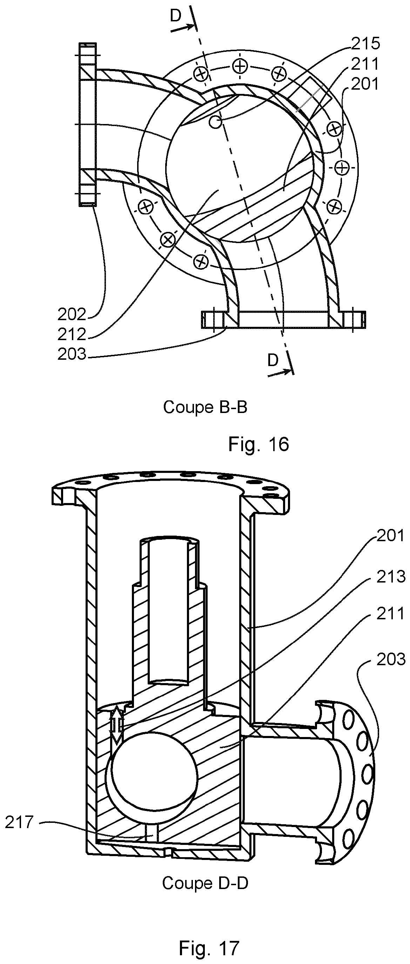

La vanne 200 est conformée de manière à ce que, quelle que soit la position du boisseau 210, le passage interne 212 soit toujours en communication avec l'entrée ou la sortie de la vanne 200. En effet, lorsque la vanne 200 est ouverte, comme illustré en figure 13, le passage interne 212 permet une communication, pratiquement sans perte de charge, entre l'entrée et la sortie. Lorsque la vanne 200 est fermée à droite, comme illustré en figure 14, le passage interne 212 communique avec la bride 203 formant par exemple la sortie. Lorsque la vanne 200 est fermée à droite, comme illustré en figure 16, le passage interne 212 communique avec la bride 202 formant typiquement l'entrée de la vanne.

Le canal d'expansion 213 étant en communication avec le passage interne 212, il est donc perpétuellement en communication avec au moins l'une parmi l'entrée ou la sortie de la vanne 200. Du liquide peut donc en permanence atteindre le réservoir d'expansion 100 formé par l'enceinte 102.

Le volume d'expansion est le volume de liquide 112 situé entre la face supérieure 214 du boisseau 210 et la surface libre 105 du liquide.

Le boisseau 210 représente une perte de charge variable. La communication entre le circuit et le réservoir d'expansion 100 se fait par un chemin qui est toujours à l'extérieur du tronçon pompe-perte de charge induite par le boisseau 210. Ainsi, quelle que soit la position du réservoir d'expansion 100 dans le circuit, le réservoir d'expansion 100 ne voit jamais la pression délivrée par la pompe contrairement au réservoir d'expansion du circuit illustré en figure 2 qui est en communication directe avec la sortie de la pompe. Par ailleurs, dans ce circuit de la figure 2, le réservoir d'expansion 100 impose la pression entre la vanne et un composant tel que l'échangeur.

De préférence, et comme illustré en figure 10, un palier 108 muni de roulements 109 est prévu pour assurer le guidage en rotation du boisseau 210. De préférence, le palier 108 guide le boisseau 210 au niveau d'un axe 216 du boisseau 210 solidaire du corps 211 du boisseau et qui s'étend selon la direction de rotation de ce dernier. De préférence, le palier 108 est situé à proximité immédiate de la face supérieure 214 du boisseau 200 formant cylindre. On prévoit dans le palier 108 un passage 110 pour le liquide provenant du passage interne 212 porté par le corps 211 du boisseau. Selon un mode de réalisation alternatif non illustré, si le palier 108 est logé dans le corps 201 de vanne, un passage peut être pratiqué dans l'épaisseur de la paroi du corps 201 de vanne pour permettre au liquide de passer depuis la face supérieure 214 du corps 211 du boisseau jusqu'à un espace situé au-dessus du palier.

Ainsi en fonctionnement, le palier 108 est immergé dans le liquide 112 présent dans le réservoir d'expansion 100.

Avantageusement, un dispositif brise-jet 111 est prévu pour éviter les projections de liquide provenant du canal d'expansion 213 avec une vitesse importante. Sur cet exemple, un brise-jet 111 est placé au-dessus du palier 108. En fonctionnement normal, le brise-jet 111 est immergé et la surface libre 105 du liquide 112 est située au-dessus du brise-jet 111.

Une surverse 107 est également prévue pour évacuer un éventuel trop-plein de liquide. En fonctionnement normal, la surface libre 105 du liquide 112 est donc située en-dessous de la surverse 107.

Dans l'enceinte 102 formée par le corps 201 de la vanne 200 et le chapeau 101, et au-dessus de la surface libre 105 du liquide 112, se trouve le gaz de pressurisation 103 également désigné gaz de ciel, dont la fonction est de compenser les variations volumiques du liquide dans le circuit et d'assurer que la pression du circuit demeure dans un intervalle acceptable de fonctionnement.

On notera que dans un premier mode de réalisation, le gaz de pressurisation 103 est au contact de la surface libre 105 du liquide 112. C'est ce mode de réalisation qui est illustré sur la figure 10. Dans un deuxième mode de réalisation, non illustré, le réservoir d'expansion présente une membrane située à l'interface entre le gaz de pressurisation 103 et la surface 105 du liquide 112. Dans ce mode de réalisation, c'est l'élasticité de cette membrane et la contre pression Pc qui assurent la pressurisation du circuit.

Un orifice 104 est aussi prévu pour la gestion de la pression du gaz de pressurisation 103. Cet orifice 104 est situé de préférence en partie supérieure du chapeau 101.

De manière avantageuse mais optionnelle, le système comprend également un dispositif de protection 8, de préférence connecté à l'orifice 104 de gestion des gaz, et configuré pour réguler et limiter la pression du gaz dans le réservoir d'expansion 100 et donc la pression du liquide dans le circuit lorsque ce dernier franchit une valeur seuil qui pourrait endommager le circuit. Lorsque le dispositif de protection 8 s'active, la surpression de gaz est dirigée vers un exutoire 81 évitant le dépassement d'une pression limite admissible pour le réservoir d'expansion et le circuit.

Comme indiqué précédemment, un dispositif de commande est prévu pour commander la position angulaire du boisseau 210 par rapport au corps 201 de vanne. On notera ici que la position angulaire du boisseau 210, et de manière plus générale la position de l'obturateur de la vanne 200 quel que soit son type, est parfaitement indépendante de la pression qui règne à l'intérieur du circuit et de la pression qui règne à l'intérieur du réservoir d'expansion 100.

Selon un mode de réalisation particulièrement avantageux, on prévoit que ce dispositif de commande soit logé à l'intérieur de l'enceinte 102 et que, de préférence également, l'accouplement entre le boisseau 210 et le dispositif de commande soit logé également à l'intérieur de l'enceinte 102. Ainsi, l'invention permet de réduire considérablement les contraintes d'étanchéité, améliorant de ce fait la fiabilité du système 10.

Plus précisément, le dispositif de commande comprend un moteur, typiquement un motoréducteur 120, de préférence logé dans l'enceinte 102 au-dessus de la surverse 107. Il est donc immergé dans le gaz de pressurisation en étant avantageusement éloigné du liquide 112. Un dispositif d'accouplement 125 entre la sortie du motoréducteur 120 et le boisseau 210 est également situé au-dessus de la surverse 107 et donc immergé dans le gaz de pressurisation 103 tout en étant éloigné du liquide 112. L'axe 216 du boisseau 210 relie le dispositif d'accouplement 125 au corps 211 du boisseau. De préférence, le motoréducteur 120 est disposé de sorte à ce que son axe de sortie soit coaxial avec l'axe 216 de rotation du boisseau 210.

De manière avantageuse, un dispositif de protection thermique 124 est disposé entre le liquide 112 et le motoréducteur 120 de manière à préserver ce dernier de la chaleur du liquide 112. Cela est d'autant plus avantageux lorsque le liquide est un métal liquide tel que le sodium. Le dispositif de protection thermique 124 peut par exemple être un empilement de disques de faibles épaisseurs et espacés entre eux ou tout autre volume ou association de sous-ensembles présentant une faible conductivité thermique. De préférence, le dispositif de protection thermique 124 est disposé autour du dispositif d'accouplement 125 comme cela est illustré en figure 10.

De préférence, le moteur est fixé sur un support 121 conformé pour se fixer sur une partie supérieure du corps 201 de vanne, par exemple au niveau de l'ouverture du corps 201 de vanne. Une fois le moteur fixé sur le corps 201 de vanne, le chapeau 101 peut ensuite être positionné sur le corps 201 de vanne pour recouvrir le moteur et former l'enceinte étanche 102. Le montage du système 10 est donc particulièrement simple. Par exemple, la solidarisation entre le corps 201 de vanne et le chapeau 101 s'effectue par boulonnage de deux brides 204, 207 portées respectivement par le corps 201 de vanne et le chapeau 101.

Lorsque le liquide est porté à une température élevée, comprise typiquement entre 300 et 500°C comme dans le cas du sodium liquide, le système 10 comprend avantageusement un circuit de refroidissement 123 du moteur. Un fluide caloporteur circule alors dans des tuyaux traversant l'enceinte 102 et pénètre dans le moteur. De préférence, des trous de passage de ces tuyaux sont pratiqués dans le chapeau 101.

L'enceinte 102, de préférence la paroi du chapeau, comprend également un trou de passage pour un ou des lignes d'alimentation 122 du moteur.

Le système 10 peut également comprendre une ou plusieurs sondes de niveau 106 pour mesurer et contrôler le niveau de liquide dans le réservoir d'expansion 100. Un trou peut être pratiqué dans l'enceinte 102, typiquement dans la paroi du chapeau 101, pour le passage des sondes 106.

De préférence, le corps 211 du boisseau présente un orifice 217 servant notamment à la vidange. Cet orifice 217 débouche d'une part dans le passage interne 212 du corps 211 du boisseau, de préférence en son point le plus bas, et d'autre part dans le fond du corps 201 de vanne. Cet orifice 217 est de préférence placé au regard d'un trou de vidange 206 pratiqué dans la paroi du corps 201 de vanne au moins pour une position angulaire du boisseau. Cet orifice 217 et ce trou de vidange 206 permettent de faciliter la vidange du système 10 intégrant la vanne 200 et le réservoir d'expansion 100.

L'invention propose ainsi un système 10 intégrant au sein d'un même composant une vanne 200 et un réservoir d'expansion 100 en communication permanente avec le liquide du circuit et dont la conception offre une fiabilité de fonctionnement améliorée, une étanchéité particulièrement simple et efficace, ainsi qu'un assemblage aisé.

Le fonctionnement de l'invention va maintenant être décrit en détail en référence aux **figures 13 à 17****.**

La **figure 13** illustre la vanne 200 en position pleinement ouverte. Dans cette position, le boisseau 210 est équivalent à la portion de coude que la vanne 200 remplace dans le circuit 1. La perte de charge dans la vanne 200 est très faible voire nulle par rapport à un coude, ce qui est un avantage par rapport aux autres vannes avec obturateur translatif. Dans cette position, la circulation du liquide est possible dans les deux sens. Le canal d'expansion 213 permet la communication du liquide circulant dans le circuit 1 avec le liquide 112 contenu dans le réservoir d'expansion 100.

Lorsque la vanne 200 est fermée à droite, comme illustré en figures 14 et 15, la circulation du liquide dans le circuit 1 est interrompue. En revanche, le passage interne 212 demeure en communication avec le tronçon de circuit connecté à la bride 202. Par l'intermédiaire du canal d'expansion 213, le réservoir d'expansion demeure donc en communication avec le liquide présent dans le tronçon connecté sur cette bride 202 comme cela apparaît en figure 15. On privilégiera cette position de la vanne 200 lorsque la bride 202 est connectée à un tronçon formant l'entrée de la pompe 2 ou à proximité de l'entrée de la pompe 2. Ainsi, en cas de baisse de pression en entrée de pompe 2, le réservoir d'expansion 100 permet une compensation du volume qui permet de maintenir la pression et évite ainsi une cavitation en entrée de pompe.

Lorsque la vanne 200 est fermée à gauche, comme illustré en figures 16 et 17, la circulation du liquide dans le circuit 1 est interrompue. En revanche, le passage interne 212 demeure en communication avec le tronçon de circuit connecté à la bride 203. Par l'intermédiaire du canal d'expansion 213, le réservoir d'expansion 100 demeure donc en communication avec le liquide présent dans le tronçon connecté sur cette bride 203 comme cela apparaît en figure 17. On privilégiera cette position de la vanne 200 lorsque la bride 203 est connectée à un tronçon formant l'entrée de la pompe 2 ou à proximité de l'entrée de la pompe 2.

Ainsi, il est préférable de veiller à adapter l'orientation angulaire du boisseau 210 en fonction du sens de circulation du liquide. De manière générale, on commandera la position du boisseau 210 de manière à mettre en communication le réservoir d'expansion 100 avec la portion du circuit 1 séparant le réservoir d'expansion 100 de l'entrée de la pompe 2.

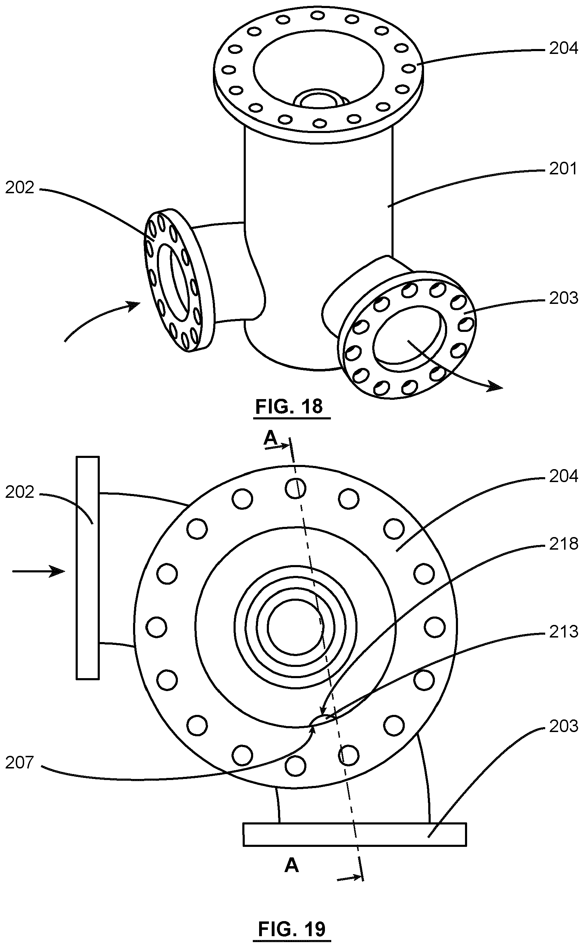

Un deuxième exemple de système 10 selon l'invention va maintenant être décrit en détail en référence aux **figures 18 à 27****.**

Le système selon ce deuxième exemple diffère du système selon le premier exemple décrit en référence aux **figures 8 à 17** en ce qui concerne le canal d'expansion 213, les autres caractéristiques décrites à propos du premier exemple étant toutes applicables à ce deuxième exemple.

Alors que dans le premier exemple, le canal d'expansion 213 est de préférence pratiqué à l'intérieur du corps 211 du boisseau 210 en formant un trou débouchant d'une part dans le passage interne 212 et d'autre part dans le réservoir d'expansion 100 du boisseau, dans ce deuxième exemple de réalisation, le canal d'expansion 213 ne forme pas un conduit linéaire entre le passage interne 212 et le réservoir d'expansion 100. Dans ce deuxième exemple, le canal d'expansion 213 est configuré pour limiter l'apparition dans le réservoir d'expansion 100 de jets de liquide provenant du liquide en mouvement dans le circuit 1. En effet, du fait de la vitesse de déplacement du liquide dans le circuit 1, du liquide peut parvenir à une vitesse relativement élevée dans le réservoir d'expansion 100. Cela peut être source de fatigue mécanique et de difficultés de contrôle-commande. En effet, ces projections de liquide induisent des fluctuations significatives du niveau de la surface libre 105 du liquide 112 et dans le réservoir d'expansion 100. Ces jets de liquide peuvent également être source de génération d'aérosols dont on souhaite éviter autant que possible la formation pour renforcer la fiabilité du mécanisme. La limitation des aérosols est très avantageuse. Sans cela, les aérosols peuvent se retrouver dans le gaz de pressurisation 103 (gaz de ciel) et viennent au niveau du motoréducteur 120. Cela en réduit la fiabilité. La limitation des aérosols améliore significativement la fiabilité du mécanisme. Par ailleurs les aérosols peuvent venir imprégner la protection thermique 124 et donc augmenter significativement sa conductivité thermique. Cela aurait pour conséquence d'augmenter la température de toutes les parties mécaniques qui sont au-dessus de la protection thermique 124, dont le motoréducteur 120, et donc en réduirait la fiabilité.

Le canal d'expansion 213 de ce deuxième mode de réalisation n'offre pas un cheminement rectiligne au liquide, génère des pertes de charge et réduit la vitesse du liquide lors de son entrée dans le réservoir d'expansion 100.

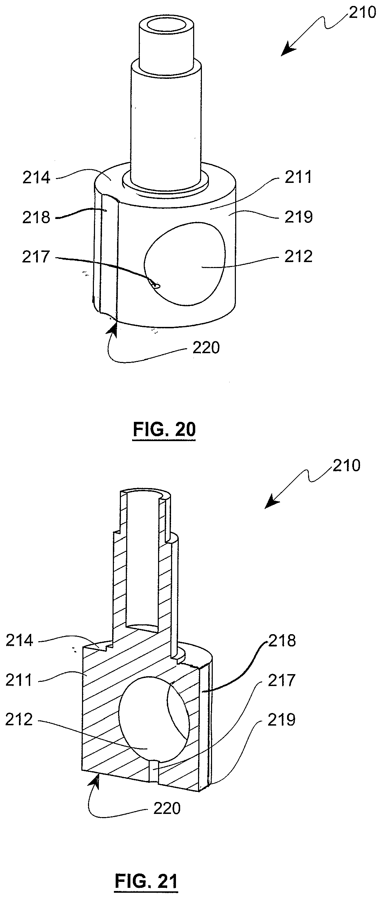

Sur l'exemple illustré, le canal d'expansion 213 comporte au moins :
- un canal inférieur 217 débouchant d'une part dans le passage interne 212 et d'autre part sous une face inférieure 220 du corps 211 du boisseau. Plus précisément, le canal inférieur 217 débouche dans un espace 221 défini par la face inférieure 220 du corps 211 du boisseau et par le fond 208 du corps 201 de la vanne ;
- un évidement 218 est pratiqué sur une face latérale 219 du corps 211 du boisseau, cet évidement débouchant d'une part sous la face inférieure 220 et d'autre part dans le réservoir d'expansion 100. Cet évidement 218 forme de préférence une rainure. Dans le cas où le boisseau 210 est cylindrique, et comme illustré sur les **figures 20 et 21**, cette rainure est de préférence linéaire et s'étend selon une direction parallèle à l'axe de rotation du boisseau 210. Dans le cas non illustré où le corps du boisseau 210 est sphérique, cette rainure s'étend sur la face interne sphérique du corps 211 du boisseau depuis la face inférieure 220 jusqu'à la face supérieure 214 du corps 211 du boisseau.

L'évidement 218 pratiqué sur la face latérale 219 du corps 211 du boisseau forme ainsi un canal ouvert. Lorsque cet évidement 218 est disposé au regard du corps 201 de vanne, plus précisément au regard de sa paroi interne 207, il coopère avec cette dernière de manière à former un canal. De préférence, la section de ce canal forme un pourtour fermé. La section est prise selon un plan perpendiculaire à la direction d'écoulement du liquide dans ce canal. Ce canal présente alors deux ouvertures, l'une débouchant sous la face inférieure 220 du corps 211 du boisseau, l'autre débouchant dans le réservoir d'expansion 100.

La **figure 19** fait apparaître clairement l'ouverture au niveau du réservoir d'expansion 100 de ce canal fermé formé par l'évidement 218 et la paroi interne 207 du corps 201 de vanne. La vanne 200 est configurée pour que le liquide présent dans le passage interne 212 puisse passer dans le canal inférieur 217 puis dans l'évidement 218 pour atteindre le réservoir d'expansion 100. Entre le canal inférieur 217 et l'évidement 218, le liquide transite par l'espace 221.

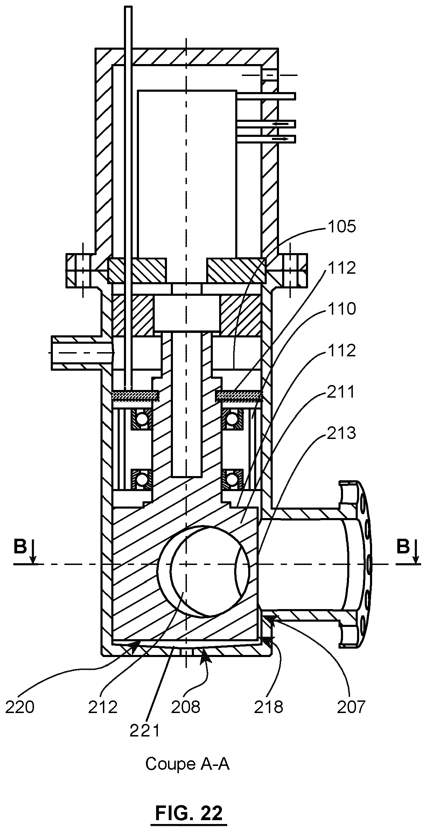

Sur la **figure 22**, le canal d'expansion 213 apparaît entre le fond de l'évidement 218 et la paroi interne 207 du corps 201 de vanne. Les autres caractéristiques du système sont identiques à celles décrites notamment en référence à la **figure 10****.**

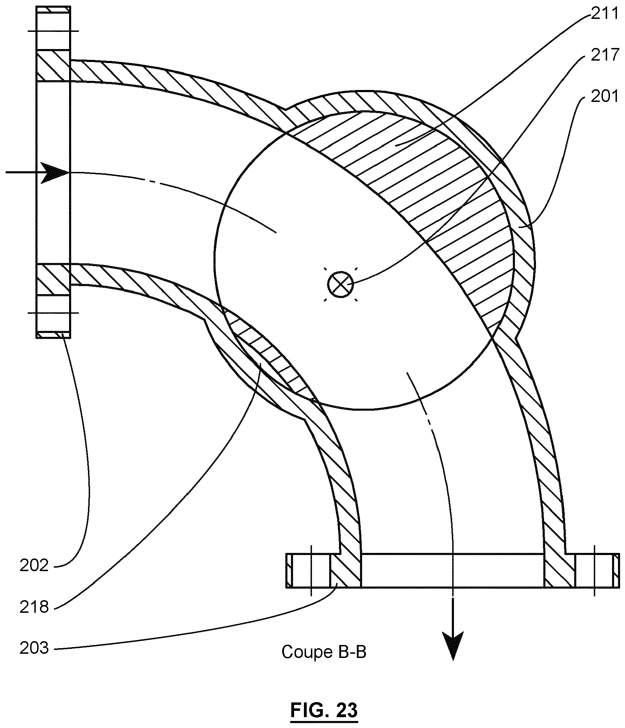

Le fonctionnement du système selon ce mode de réalisation va maintenant être décrit en détail en référence aux **figures 23 à 27****.**

La **figure 23** illustre la vanne 200 en position pleinement ouverte. Dans cette position, le boisseau 210 est équivalent à la portion de coude que la vanne 200 remplace dans le circuit 1. La perte de charge dans la vanne 200 est très faible voire nulle. Plus généralement elle est identique au coude que cette vanne remplace. Dans cette position, la circulation du liquide est possible dans les deux sens. Le liquide présent dans le passage interne 212 communique avec le canal inférieur 217 pour atteindre l'espace formé entre la face inférieure 220 du corps 211 de boisseau et le fond 220 du corps 201 de vanne. Le liquide parvient ensuite dans le canal fermé défini par la coopération entre l'évidement 218 et la paroi interne 207 du corps 201 de vanne. Il peut ainsi entrer dans le réservoir d'expansion 100. Le cheminement du liquide dans le canal d'expansion 213, formé par le canal inférieur 217, l'espace 221 et l'évidement 218, permet de limiter la vitesse du liquide en entrée du réservoir d'expansion 100 et de limiter la formation de jets de liquide dans ce dernier. Cela est d'autant plus avantageux que dans cette position angulaire du corps 211 du boisseau, la vitesse du liquide traversant la vanne 200 est habituellement importante.

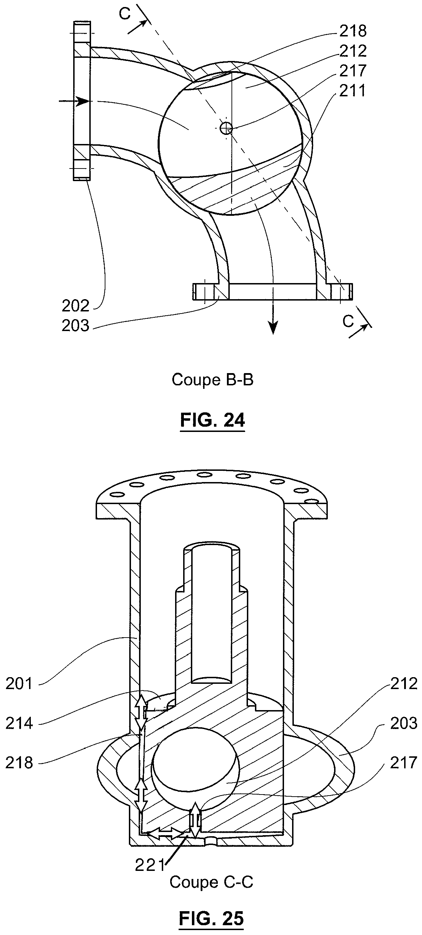

Lorsque la vanne 200 est fermée à droite, comme illustré en **figures 24 et 25****,** la circulation du liquide dans le circuit 1 est interrompue. En revanche, le passage interne 212 demeure en communication avec le tronçon de circuit connecté à la bride 202. Par l'intermédiaire du canal d'expansion 213, le réservoir d'expansion 100 demeure donc en communication avec le liquide présent dans le tronçon connecté sur cette bride 202 comme cela apparaît en figure 25.

Dans le cas où la vanne 200 est fermée et où l'évidement 218 n'est pas en communication directe avec l'entrée ou la sortie de la vanne 200 mais coopère avec la paroi interne 207 du corps 201 de vanne pour former un canal fermé, le liquide atteint le réservoir d'expansion 100 en passant par le passage interne 212, le canal inférieur 217, l'espace 221 puis l'évidement 218, comme cela est le cas lorsque la vanne est ouverte (et comme illustré en figure 23).

Dans cette position du boisseau, les risques d'apparition de jets de liquide dans le réservoir sont limités voire supprimés.

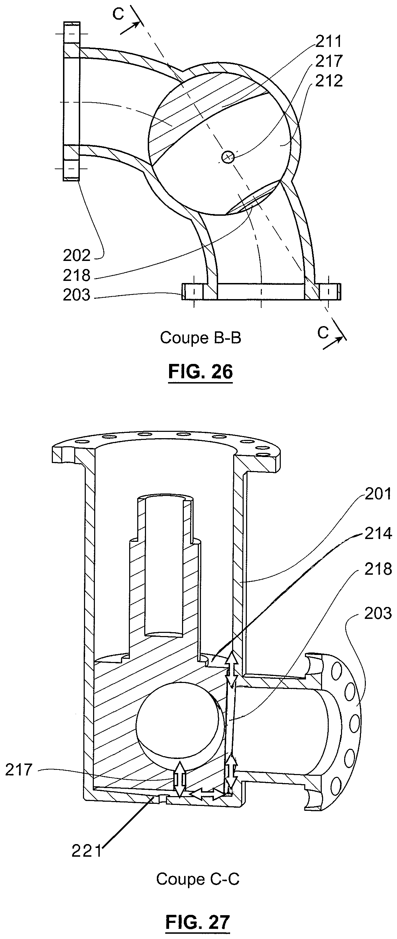

Lorsque la vanne 200 est fermée à gauche, comme illustré en **figures 26 et 27****,** la circulation du liquide dans le circuit 1 est interrompue. En revanche, le passage interne 212 demeure en communication avec le tronçon de circuit connecté à la bride 203. Par l'intermédiaire du canal d'expansion 213, le réservoir d'expansion 100 demeure donc en communication avec le liquide présent dans le tronçon connecté sur cette bride 203 comme cela apparaît en figure 27.

Dans le cas où la vanne 200 est fermée et où l'évidement 218 est en communication directe avec l'entrée ou la sortie de la vanne 200 (la sortie sur l'exemple des figures 26 et 27) le liquide atteint le réservoir d'expansion 100 en pénétrant depuis l'entrée/la sortie de la vanne directement dans l'évidement 218. Certes du liquide peut pénétrer dans le passage interne 212 par l'évidement 218, l'espace 221 et le canal inférieur 217, mais ce liquide demeure dans le passage interne 212 sans pouvoir traverser la vanne 200.

On privilégiera cette position de la vanne 200 lorsque la bride 203 est connectée à un tronçon formant l'entrée de la pompe 2 ou à proximité de l'entrée de la pompe 2. Dans ce tronçon, la vitesse du liquide est généralement faible et les risques de jets dans le réservoir d'expansion 100 sont limités.
- Dans chacun des modes de réalisation envisagés dans la description ci-dessus, l'obturateur est mobile à l'intérieur du corps 201 de vanne 200 qui lui est fixe par rapport au conduits connectés à l'entrée et à la sortie de la vanne 200. Le réservoir d'expansion 100 est quant à lui fixe par rapport au corps 201 de vanne 200. L'obturateur mobile est quant à lui mobile par rapport au réservoir d'expansion 100.

Avantageusement, l'obturateur mobile est distant d'une partie au moins du réservoir d'expansion 100. Ainsi, dans une partie au moins du réservoir d'expansion 100, l'obturateur mobile est absent.

Ainsi, le réservoir d'expansion 100 est distinct de l'obturateur mobile. Cela permet notamment de ne pas entraîner en déplacement, typiquement en rotation, le réservoir d'expansion 100 lors du déplacement de l'obturateur mobile, le réservoir d'expansion 100 comprenant possiblement un volume significatif de liquide et de gaz. Le système est ainsi rendu plus robuste, plus fiable et moins complexe.

Par ailleurs, l'indépendance entre le réservoir d'expansion 100 et l'obturateur mobile permet de dimensionner indépendamment ces deux éléments. En particulier, le réservoir d'expansion 100 peut être adapté, notamment en termes de volume, aux caractéristiques du circuit (débit, pression), tout en conservant un obturateur mobile de faible dimension. Un obturateur mobile de faible dimension permet notamment de réduire l'encombrement du système et de faciliter la réalisation d'un obturateur mobile aux dimensions et états de surface parfaitement maîtrisés de manière à garantir une bonne étanchéité de la vanne en position fermée.

Au vu de la description qui précède, il ressort clairement que l'invention offre un système efficace pour améliorer la fiabilité et la simplicité des circuits réversibles, particulièrement ceux dans lesquels circule un liquide à haute température et/ou chimiquement réactif. L'invention offre ainsi une solution particulièrement avantageuse pour les circuits d'essais pour pompes électromagnétiques pour métaux liquides telles que celles utilisées dans les circuits sodium de certains réacteurs nucléaires. Par ailleurs, l'invention s'avère avantageuse, quel que soit le liquide, dans les circuits où il est nécessaire de procéder à une inversion du sens de circulation, par exemple pour nettoyer des filtres en ligne.

L'invention n'est pas limitée aux modes de réalisations précédemment décrits et s'étend à tous les modes de réalisation couverts par les revendications.

Notamment, l'invention ne se limite pas aux vannes coudées mais s'étend aux vannes linéaires.

Elle ne se limite pas non plus aux systèmes dont la vanne à boisseau est un boisseau cylindrique mais s'étend également aux systèmes dont la vanne est une vanne à boisseau sphérique.

Par ailleurs, l'invention couvre également les systèmes dont la vanne n'est pas une vanne à boisseau mais comporte un obturateur translatif.

En outre, l'invention couvre également les systèmes dans lesquels le moteur est disposé hors de l'enceinte formée par le corps de vanne et par le chapeau. Dans ce cas, un dispositif d'accouplement traverse l'enceinte.

**REFERENCES**

| | | | |
|---|---|---|---|
| 1. | Circuit | 120. | Motoréducteur |
| 2. | Pompe | 121. | Support de moteur |
| 3. | Tronçon | 122. | Lignes |
| 4. | Tronçon | | d'alimentation/contrôle |
| 5. | Tronçon | 123. | Circuit de refroidissement |
| 6. | Echangeur | 124. | Dispositif de protection |
| 7. | Réservoir d'expansion | | thermique |
| 71. | Liquide | 125. | Dispositif d'accouplement |
| 72. | Gaz de pressurisation | | |
| 73. | Niveau libre | | |
| 74. | Vanne d'isolement | | |
| 7'. | Réservoir d'expansion | 200. | Vanne |
| 74'. | Vanne d'isolement | 201. | Corps de vanne |
| 8. | Dispositif de protection | 202. | Bride d'entrée |
| 81. | Exutoire | 203. | Bride de sortie |
| 9. | Vanne de laminage | 204. | Bride de chapeau |
| 91. | Deuxième vanne de laminage | 205. | Rebord |
| | | 206. | Trou de vidange |
| 10. | Système | 207. | Paroi interne |
| | | 208. | Fond du corps de vanne |
| 100. | Réservoir d'expansion | | |
| 101. | Chapeau de vanne | 210. | Boisseau |
| 102. | Enceinte étanche | 211. | Corps de boisseau |
| 103. | Gaz de pressurisation | 212. | Passage interne |
| 104. | Orifice pour gaz de pressurisation | 213. | Canal d'expansion |
| 105. | Surface libre du liquide | 214. | Face supérieure |
| 106. | Sonde de niveau | 215. | Trou supérieur |
| 107. | Surverse | 216. | Axe |
| 108. | Palier | 217. | Orifice inférieur |
| 109. | Roulement | 218. | Evidement |
| 110. | Passage de palier | 219. | Face latérale |
| 111. | Brise-jet | 220. | Face inférieure |
| 112. | Liquide | 221. | Espace |

## Revendications

1. Système de régulation d'un liquide circulant dans un circuit (10), le système comprenant :
- une vanne (200) de régulation comprenant au moins une entrée et une sortie et comprenant un obturateur mobile dont la position permet de réguler le débit de l'écoulement du liquide à travers la vanne (200),
- un réservoir d'expansion (100) en communication avec le liquide s'écoulant dans le circuit (1) et destiné à contenir du liquide et un gaz de compensation, le réservoir d'expansion (100) étant raccordé au circuit (1) par l'intermédiaire de la vanne (200) et de manière à ce que le réservoir d'expansion (100) communique avec au moins l'une parmi l'entrée et la sortie de la vanne (200) quelle que soit la position de l'obturateur, la position de l'obturateur étant indépendante de la pression du fluide dans le réservoir d'expansion (100), l'obturateur présentant au moins un canal d'expansion (213) et le système étant agencé de manière à ce que la communication entre le réservoir d'expansion et entre l'une parmi l'entrée et la sortie de la vanne (200) s'effectue au moins en partie par ledit canal d'expansion (213) quelle que soit la position de l'obturateur, **caractérisé en ce que** l'obturateur mobile est mobile par rapport au réservoir d'expansion (100).

2. Système (10) selon la revendication précédente, dans lequel le réservoir d'expansion (100) est verticalement disposé plus haut que l'obturateur mobile.

3. Système (10) selon l'une quelconque des revendications précédentes, dans lequel le réservoir d'expansion (100) surmonte l'obturateur mobile et dans lequel la vanne (200) est une vanne à boisseau et dans lequel l'obturateur est un boisseau (210) et de préférence dans lequel le boisseau (210) comprend un passage interne (212) à travers lequel est destiné à passer le liquide s'écoulant depuis l'entrée vers la sortie de la vanne (200) et dans lequel le boisseau (210) comporte au moins un canal d'expansion (213), entièrement porté par le boisseau (210), présentant une première extrémité qui débouche dans le passage interne (212) et présentant une deuxième extrémité qui débouche dans le réservoir d'expansion (100).

4. Système (10) selon la revendication 2, comprenant un passage interne (212) à travers lequel est destiné à passer le liquide s'écoulant depuis l'entrée vers la sortie de la vanne (200) et dans lequel le boisseau (210) comprend une face latérale (219) portant un évidement (218) conformé pour:
- dans certaines positions du boisseau (210), être en communication directe avec le liquide provenant de l'entrée ou de la sortie de la vanne (200) et,
- dans d'autres positions du boisseau, coopérer avec une paroi interne (207) d'un corps (201) de la vanne (200) de manière à former un canal fermé débouchant d'une part dans le réservoir d'expansion (100) et débouchant d'autre part dans un espace (221) formé par une face inférieur (220) du boisseau (210) et un fond (208) du corps (201) de la vanne (200), cet espace (221) étant en communication avec le passage interne (212) par un canal (217) pratiqué dans le boisseau (210).

5. Système (10) selon la revendication précédente, conformé de manière à ce que lorsque la vanne (200) est ouverte, le réservoir d'expansion (100) communique avec le liquide traversant la vanne (200) uniquement par l'intermédiaire de l'évidement (218), dudit espace (221) et du canal inférieur (217).

6. Système (10) selon l'une quelconque des revendications précédentes, dans lequel la vanne (200) comprend un corps (201) et un chapeau (101) formant une enceinte (102) et dans lequel le réservoir d'expansion (100) est logé dans l'enceinte (102) et de préférence dans lequel le réservoir d'expansion (100) est fixe par rapport au corps (201) de vanne (200) lors du déplacement de l'obturateur mobile.

7. Système (10) selon l'une quelconque des revendications précédentes, dans lequel la vanne (200) est une vanne à boisseau et l'obturateur est un boisseau (210), le système étant configuré de manière orienter le sens de fermeture du boisseau (210) en fonction du sens de circulation du liquide dans le circuit (1).

8. Système (10) selon l'une quelconque des revendications précédentes, dans lequel la vanne (200) est une vanne à boisseau et l'obturateur est un boisseau (210) et dans lequel le boisseau (210) est actionné par un dispositif de commande comprenant un motoréducteur (120) logé à l'intérieur du réservoir d'expansion (100).

9. Système (10) selon la revendication précédente, comprenant un dispositif de protection thermique (124) logé à l'intérieur du réservoir d'expansion (100) et conformé pour isoler thermiquement le motoréducteur (120) de la chaleur du liquide.

10. Système (10) selon l'une quelconque des revendications précédentes, dans lequel la vanne (200) est une vanne à boisseau et l'obturateur est un boisseau (210), le système comprenant un palier de guidage (108) en rotation du boisseau (210) et le palier étant logé à l'intérieur du réservoir d'expansion (100).

11. Système (10) selon l'une quelconque des revendications précédentes, dans lequel la vanne (200) est prise parmi : une vanne de laminage, une vanne coudée et une vanne droite.

12. Système (10) selon l'une quelconque des revendications précédentes, dans lequel le réservoir d'expansion (100) est connecté sur la vanne (200) en étant disposé à distance de cette dernière.

13. Système (10) selon l'une quelconque des revendications précédentes, dans lequel la vanne (200) comprend un corps (201) et un chapeau (101) et dans lequel le réservoir d'expansion (100) est formé par des parois internes du corps (201) de vanne (200), par une paroi interne du chapeau (101) et par une face supérieure (214) d'un corps de l'obturateur mobile.

14. Circuit (1) comprenant un système selon l'une quelconque des revendications précédentes et une pompe (2) apte à débiter dans deux sens opposés.

15. Utilisation du système (10) selon l'une quelconque des revendications 1 à 13 pour réguler la circulation d'un liquide présentant une température supérieure ou égale à 350°C et de préférence supérieure ou égale à 400°C.

16. Utilisation du système (10) selon la revendication précédente pour réguler la circulation de sodium liquide destiné à assurer le transfert de chaleur dans un circuit de réacteur nucléaire à caloporteur sodium.

## Patentansprüche

1. System zur Regulierung einer Flüssigkeit, die in einem Kreislauf (10) zirkuliert, wobei das System Folgendes umfasst:
- ein Ventil (200) zur Regulierung, das mindestens einen Eingang und einen Ausgang umfasst und ein bewegliches Absperrorgan umfasst, dessen Stellung ermöglicht, die Durchflussmenge der Flüssigkeit durch das Ventil (200) hindurch zu regulieren,
- einen Expansionsbehälter (100) in Kommunikation mit der Flüssigkeit, die in dem Kreislauf (1) fließt, und dazu bestimmt ist, Flüssigkeit und ein Kompensationsgas zu enthalten,
- wobei der Expansionsbehälter (100) mit dem Kreislauf (1) über das Ventil (200) verbunden ist und dergestalt, dass der Expansionsbehälter (100) mit mindestens einem, dem Eingang oder dem Ausgang des Ventils (200), ganz gleich in welcher Stellung sich das Absperrorgan befindet, kommuniziert, wobei die Stellung des Absperrorgans unabhängig von dem Druck des Fluids in dem Expansionsbehälter (100) ist, wobei das Absperrorgan mindestens einen Expansionskanal (213) aufweist, und das System dergestalt eingerichtet ist, dass die Kommunikation zwischen dem Expansionsbehälter und zwischen einem, dem Eingang oder dem Ausgang des Ventils (200) mindestens teilweise durch den Expansionskanal (213) erfolgt, ganz gleich in welcher Stellung sich das Absperrorgan befindet, **dadurch gekennzeichnet, dass** das bewegliche Absperrorgan in Bezug auf den Expansionsbehälter (100) beweglich ist.

2. System (10) nach dem vorhergehenden Anspruch, wobei der Expansionsbehälter (100) senkrecht gesehen höher als das bewegliche Absperrorgan angeordnet ist.

3. System (10) nach irgendeinem der vorhergehenden Ansprüche, wobei der Expansionsbehälter (100) das bewegliche Absperrorgan dominiert, und wobei es sich bei dem Ventil (200) um ein Kugelventil handelt, und wobei es sich bei dem Absperrorgan um eine Kugel (210) handelt, und wobei die Kugel (210) vorzugsweise einen Innendurchgang (212) aufweist, durch welchen hindurch die Flüssigkeit gehen soll, die aus dem Eingang zu dem Ausgang des Ventils (200) fließt, und wobei die Kugel (210) mindestens einen Expansionskanal (213) umfasst, der vollständig von der Kugel (210) getragen wird, der ein erstes Ende aufweist, das in den Innendurchgang (212) einmündet, und ein zweites Ende aufweist, das in den Expansionsbehälter (100) einmündet.

4. System (10) nach Anspruch 2, das einen Innendurchgang (212) aufweist, durch welchen hindurch die Flüssigkeit gehen soll, die von dem Eingang zu dem Ausgang des Ventils (200) fließt, und wobei die Kugel (210) eine Seitenfläche (219) aufweist, welche eine Aussparung (218) trägt, die dazu ausgestaltet ist:
- in bestimmten Stellungen der Kugel (210) in direkter Kommunikation mit der Flüssigkeit zu stehen, die aus dem Eingang oder dem Ausgang des Ventils (200) kommt, und
- in anderen Stellungen der Kugel, mit einer Innenwand (207) eines Körpers (201) des Ventils (200) dergestalt zusammen zu wirken, dass ein geschlossener Kanal gebildet wird, der einerseits in den Expansionsbehälter (100) einmündet und andererseits in einen Raum (221) einmündet, der durch eine untere Seite (220) der Kugel (210) und einen Boden (208) des Körpers (201) des Ventils (200) gebildet wird, wobei dieser Raum (221) mit dem Innendurchgang (212) durch einen Kanal (217) in Kommunikation steht, der in der Kugel (210) vorgesehen ist.

5. System (10) nach dem vorhergehenden Anspruch, dergestalt ausgestaltet, dass, wenn das Ventil (200) geöffnet ist, der Expansionsbehälter (100) mit der Flüssigkeit, die das Ventil (200) durchquert, nur mittels der Aussparung (218) des Raumes (221) und des unteren Kanals (217) kommuniziert.

6. System (10) nach irgendeinem der vorhergehenden Ansprüche, wobei das Ventil (200) einen Körper (201) und eine Haube (101) aufweist, die einen abgeschlossenen Bereich (102) ausbilden, und wobei der Expansionsbehälter (100) in dem abgeschlossenen Bereich (102) untergebracht ist, und wobei vorzugsweise der Expansionsbehälter (100) in Bezug auf den Körper (201) des Ventils (200) während der Verschiebung des beweglichen Absperrorgans feststehend ist.

7. System (10) nach irgendeinem der vorhergehenden Ansprüche, wobei es sich bei dem Ventil (200) um ein Kugelventil handelt und es sich bei dem Absperrorgan um eine Kugel (210) handelt, wobei das System dergestalt ausgestaltet ist, dass die Schließrichtung der Kugel (210) in Abhängigkeit von der Zirkulationsrichtung der Flüssigkeit in dem Kreislauf (1) ausgerichtet wird.

8. System (10) nach irgendeinem der vorhergehenden Ansprüche, wobei es sich bei dem Ventil (200) um ein Kugelventil handelt und es sich bei dem Absperrorgan um eine Kugel (210) handelt, und wobei die Kugel (210) über eine Steuervorrichtung betätigt wird, die einen Getriebemotor (120) aufweist, der im Inneren des Expansionsbehälters (100) untergebracht ist.

9. System (10) nach dem vorhergehenden Anspruch, das eine thermische Schutzvorrichtung (124) aufweist, die im Inneren des Expansionsbehälters (100) untergebracht ist, und dazu ausgestaltet ist, den Getriebemotor (120) thermisch gegen die Wärme der Flüssigkeit zu isolieren.

10. System (10) nach irgendeinem der vorhergehenden Ansprüche, wobei es sich bei dem Ventil (200) um ein Kugelventil handelt, und es sich bei dem Absperrorgan um eine Kugel (210) handelt, wobei das System ein drehendes Führungslager (108) der Kugel (210) aufweist, und das Lager im Inneren des Expansionsbehälters (100) untergebracht ist.

11. System (10) nach irgendeinem der vorhergehenden Ansprüche, wobei das Ventil (200) eingeschlossen ist, zwischen: einem Entspannungsventil, einem abgewinkelten Ventil und einem geraden Ventil.

12. System (10) nach irgendeinem der vorhergehenden Ansprüche, wobei der Expansionsbehälter (100) an das Ventil (200) dergestalt angeschlossen ist, dass er von diesem letzteren entfernt angeordnet ist.

13. System (10) nach irgendeinem der vorhergehenden Ansprüche, wobei das Ventil (200) einen Körper (201) und eine Haube (101) aufweist, und wobei der Expansionsbehälter (100) durch die Innenwände des Körpers (201) des Ventils (200), durch eine Innenwand der Haube (101) und durch eine obere Fläche (214) eines Körpers des beweglichen Absperrorgans ausgebildet wird.

14. Kreislauf (1), der ein System nach irgendeinem der vorhergehenden Ansprüche und eine Pumpe (2) aufweist, die in der Lage ist, in zwei entgegengesetzte Richtungen zu fördern.

15. Verwendung des Systems (10) nach irgendeinem der Ansprüche 1 bis 13, um die Zirkulation einer Flüssigkeit zu regulieren, die eine Temperatur höher oder gleich 350 °C und vorzugsweise höher oder gleich 400 °C hat.

16. Verwendung des Systems (10) nach dem vorhergehenden Anspruch, um die Zirkulation von flüssigem Natrium zu regulieren, das dazu bestimmt ist, den Wärmetransfer in einem Kreislauf eines Nuklearreaktors mit Natrium als Kühlflüssigkeit sicherzustellen.

## Claims

1. System for regulating a liquid in a circuit (10), with the system comprising:
- a regulating valve (200) comprising at least one inlet and one outlet and comprising a movable obturator the position of which makes it possible to adjust the flow rate of the liquid through the valve (200),
- an expansion reservoir (100) in communication with the liquid flowing in the circuit (1) and intended to contain liquid and a compensating gas,
the expansion reservoir (100) being connected to the circuit (1) by means of the valve (200) and such that the expansion reservoir (100) communicates with at least one from among the inlet and the outlet of the valve (200) irrespective of the position of the obturator, the position of the obturator being independent of the pressure of the fluid in the expansion reservoir (100), with the obturator having at least one expansion channel (213) and the system being arranged in such a way that the communication between the expansion reservoir and between one from among the inlet and the outlet of the valve (200) is carried out at least partially by said expansion channel (213) irrespective of the position of the obturator **characterized in that** the movable obturator is movable with respect to the expansion reservoir (100).

2. System (10) according to the preceding claim, wherein the expansion reservoir (100) is vertically arranged higher than the movable obturator.

3. System (10) according to any of the preceding claims, wherein the expansion reservoir (100) surmounts the movable obturator and wherein the valve (200) is a plug valve and wherein the obturator is a plug (210) and preferably, wherein the plug (210) comprises an internal passage (212) through which is intended to pass the liquid flowing from the inlet to the outlet of the valve (200) and wherein the plug (210) comprises at least one expansion channel (213), entirely carried by the plug (210), having a first end which opens into the internal passage (212) and having a second end that opens into the expansion reservoir (100).

4. System (10) according to claim 2, comprising an internal passage (212) through which is intended to pass the liquid flowing from the inlet to the outlet of the valve (200) and wherein the plug (210) comprises a lateral face (219) carrying a recess (218) conformed to:
- in certain positions of the plug (210), be in direct communication with the liquid coming from the inlet or from the outlet of the valve (200) and,
- in other positions of the plug, cooperate with an inner wall (207) of a body (201) of the valve (200) in such a way as to form a closed channel opening on the one hand into the expansion reservoir (100) and opening on the other hand into a space (221) formed by a lower face (220) of the plug (210) and a bottom (208) of the body (201) of the valve (200), with this space (221) being in communication with the internal passage (212) by a channel (217) made in the plug (210).

5. System (10) according to the preceding claim, conformed in such a way that when the valve (200) is open, the expansion reservoir (100) communicates with the liquid passing through the valve (200) solely through the recess (218), of said space (221) and of the lower channel (217).

6. System (10) according to any of the preceding claims, wherein the valve (200) comprises a body (201) and a cover (101) forming an enclosure (102) and wherein the expansion reservoir (100) is housed in the enclosure (102) and preferably, wherein the expansion reservoir (100) is fixed with respect to the body (201) of the valve (200) during the displacement of the movable obturator.

7. System (10) according to any of the preceding claims, wherein the valve (200) is a plug valve and the obturator is a plug (210), with the system being configured in such a way as to orient the direction of the closing of the plug (210) according to the direction of the circulation of the liquid in the circuit (1).

8. System (10) according to any of the preceding claims, wherein the valve (200) is a plug valve and the obturator is a plug (210) and wherein the plug (210) is actuated by a control device comprising a reduction gear (120) housed inside the expansion reservoir (100).

9. System (10) according to the preceding claim, comprising a thermal protection device (124) housed inside the expansion reservoir (100) and conformed to thermally insulate the reduction gear (120) from the heat of the liquid.

10. System (10) according to any of the preceding claims, wherein the valve (200) is a plug valve and the obturator is a plug (210), with the system comprising a rotational guiding bearing (108) of the plug (210) and the bearing being housed inside the expansion reservoir (100).

11. System (10) according to any of the preceding claims, wherein the valve (200) is a is taken from throttle valve, elbow valve and straight valve.

12. System (10) according to any of the preceding claims, wherein the expansion reservoir (100) is connected to the valve (200) by being arranged at a distance from the latter.

13. System (10) according to any of the preceding claims, wherein the valve (200) comprises a body (201) and a cover (101) and wherein the expansion reservoir (100) is formed by the inner walls of the body (201) of the valve (200), by an inner wall of the cover (101) and by an upper face (214) of a body of the movable obturator.

14. Circuit (1) comprising a system according to any of the preceding claims and a pump (2) able to deliver in two opposite directions.

15. Usage of a system (10) according to any of claims 1 to 13 to adjust the circulation of a liquid having a temperature greater than or equal to 350°C and preferably greater than or equal to 400°C.

16. Usage of a system (10) according to the preceding claim to adjust the circulation of liquid sodium intended to provide for the heat transfer in a circuit of a sodium cooled nuclear reactor.
